Europäisches Patentamt

⑲ 🄰 European Patent Office

Office européen des brevets

(11) Publication number: **0 222 133**
**B1**

(12) **EUROPEAN PATENT SPECIFICATION**

(45) Date of publication of the patent specification:
**12.12.90**

(51) Int. Cl.⁵: **G11B 20/10**, G11B 20/14

(21) Application number: **86113529.1**

(22) Date of filing: **01.10.86**

(54) **Digital data separator.**

(30) Priority: **10.10.85 IT 2243085**

(43) Date of publication of application:
**20.05.87 Bulletin 87/21**

(45) Publication of the grant of the patent:
**12.12.90 Bulletin 90/50**

(84) Designated Contracting States:
**DE FR GB NL**

(56) References cited:
**EP-A- 0 141 028**
**EP-A- 0 195 368**
**GB-A- 2 080 658**

**IBM TECHNICAL DISCLOSURE BULLETIN, vol. 18, no. 5,**
**October 1975, pages 1571-1573, New York, US; T.H.**
**MILLER et al.: "Statistical digital data separator"**

(73) Proprietor: **BULL HN INFORMATION SYSTEMS ITALIA**
**S.p.A., Via Martiri d'Italia 3, I-10014 Caluso (Torino)(IT)**

(72) Inventor: **Troletti, Bonifacio, Via Colture 31 A,**
**I-25047 Darfo-Boario Terme (BS)(IT)**

## Description

The present invention relates to a digital data separator for a recovery apparatus of binary information recorded on magnetic media, such as disks, diskettes, tapes, in frequency modulation (FM) or modified frequency modulation (MFM).

Successively read out binary 1 or 0 bits recorded in FM are identified by the presence or absence, respectively, of a pulse in the center of contiguous recorded cells.

Each cell is defined by two timing pulses. The first one defines the beginning of the cell and the second one defines the beginning of the subsequent cell.

The time interval of a cell varies according to the media used. For istance, in the case of an 8 inch diskette and FM recording, the cell has a nominal length of 4 microseconds. Therefore, the nominal time intervals between two subsequent pulses may be 2 microseconds or 4 microseconds.

In the case of a 5 1/4 inch diskette the nominal length of a cell is generally 8 microseconds.

In the case of MFM recording successively read out binary 1 or 0 bits are also identified by the presence or absence respectively of a pulse in the center of contiguous cells.

However, MFM recording differs from FM recording in that the timing pulse, defining the beginning of a cell, is absent when a pulse representative of a binary 1 information is presente in the center of such cell or in the preceeding one.

For MFM also, the time interval of the cell depends on the recording media. For instance, in case of an 8 inch diskette and MFM recording, the nominal length of the cell is 2 microseconds.

Therefore, the nominal interval time between two subsequent pulses can be 2, 3 or 4 microseconds.

In the case of a 5 1/4 inch diskette, the nominal. length of a cell is generally 4 microseconds.

Further information on FM or MFM recording methods can be found in the IBM document GA 21-9257-1 entitled "IBM Two side diskette Original Equipment Manufacturers Information - Second Edition" dated Nov. 1977. The pulse sequence read out from the magnetic media support is applied to an input of a recovery system which supplies to an output the binary information related to the input pulse sequence.

Such pulse sequence periodically includes a so-called synchronization field (generally of 6 or 12 bytes), containing a predetermined number of pulses corresponding to a plurality of contiguous cells in which all "1" information bits or all "0" information bits have been recorded.

The synchronization field is used by the recovery system for locking in and for establishing if a pulse detected in the input is a timing pulse or a pulse representative of a recorded information bit.

The recovery system is therefore able to correctly detect information recorded on the magnetic medium on the basis of the time interval between two subsequent pulses and the nature of such pulses. Unfortunately, data recovery through only measurement of the time interval between subsequent pulses is not reliable, since such interval may present a substantial deviation from its nominal value resulting in the misinterpretation of the pulse sequence during the recovery phase.

Such deviation results from two main causes. The first is due to speed changes in the magnetic media, that is in the rotational speed tolerances of the motor which drives the magnetic media.

The second is due to the so-called phenomenon of peak-shift of the recorded pulse. As it is well known in the art, such shift is primarily due to the mutual influence of adjacent pulses.

As known, such shift can be considered zero only when the recorded pulses density is constant, that is, if the interval between subsequent pulses is always equal.

Clearly thin situation does not exists in FM and MFM recording except for the synchronization field. Therefore, the recovery system needs apparatus to correct for the causes of such errors.

The most known of these apparatuses are those which make use of an analogic phase lock oscillator.

Digital phase lock circuits have been recently suggested. Among the phase lock circuits, the apparatus disclosed by European patent application N. 84107390.1 of 22.6.1984 published on May 15, 1985 with n. 0141028 can be considered as exemplary of the state of the art.

According to such patent application, the problem of recovering digital information recorded on magnetic media is solved by providing circuits able to identify, through the measurement of the actual interval between subsequent pulses, the synchronization field which is not affected by peak-shift but only by a possible speed error, and therefore to establish the speed error of the magnetic media as to a nominal speed during a time interval comprising a suitable number of read out pulses.

This information, updated at each synchronization field detection is used during the reading out of subsequent read out pulses to correct the interval measured between subsequent read out pulses, thus providing an interval measure only affected by peak-shift error of pulse $n$ and $n^{-1}$ defining the measured interval.

This information is applied to a peak shift recovery unit together with an information (supplied in feedback by the same recovery unit) defining, in suitable code, the entity and the direction of the peak-shift of read pulse n-1.

The deduction of the peak-shift of read pulse n-1 from the correct duration measure allows to calculate the nominal duration of the interval N between read pulse n-1, n and the entity and the direction of the peak-shift of pulse n.

The peak-shift of pulse n is sent back for allowing to discriminate between nominal duration of the subsequent interval N+1 and peak-shift of the subsequent read pulse n+1 and so on.

Pratically, to avoid the propagation and the accumulation of measurement errors, the peak-shift recovery system supplies in feedback not the peak-shift measurement obtained by a difference between measures, but an "equivalent" code representative of nominal and actual duration of a determined number of intervals between immediately preceeding read pulses.

The approach discloses by the mentioned patent application is extremely efficacious, provides an high discriminating capability, greater than the one offered by a lot of analogic circuits and by other digital circuits.

Substantially it follow a correction concept in two phases:

a speed correction based on a precise speed measurement, speed being detected when peak-shift phenomena are missing, and a subsequent peak-shift recovery.

In the embodiment described in the above mentioned patent application the peak-shift recovery is performed by means of a read only memory ROM (or in case by an EPROM) which needs to receive in input an high number of information bits and therefore requires a relevant capacity, of a least 4 Kbytes.

The ROM,by transcoding, performs a set of complex logical operation.

The digital data separator, however simple from the circuital standpoint, is therefore difficult to be implemented and manufactured in form of a single integrated circuit component, because it needs large size semiconductor chips, which must contain, in addition to the circuit logig, a memory of relevant capacity.

This limitation is overcome by the digital data separator which is the object of the present invention where the peak-shift recovery is performed by the combined use of two logical transcoding networks, in cascade each to the other, equivalent to ROMs or EPROMs having a small capacity and an arithmetical logic unit. These logical components, are relatively simple and easy to be integrated on a single chip.

Substantially the peak shift recovery process is divided in logically distinct phases.

Phases which may be developed with elementary arithmetical operations are performed by means of arithmetical networks, whilst phases developing operations which are functionally complex, are performed by logical transcoding networks.

Further, having the peak-shift recovery process to be performed in a limited available time, the process is divided in two phases, the one subsequent to the other in time, in a way such that the first timed phase can be performed by using information available before the time interval allowed for peak shift recovery.

Thus the second timed phase can be performed during the whole time interval allowed for peak-shift recovery.

The execution of time cascade operations is therefore made possible even within the time limitations imposed by the reading speed of the currently used media, as well by the foreseable increases of the reading speed in the next future.

These and other features will appear more clearly from the following description of a preferred embodiment of the invention and from the enclosed drawings where:

Figure 1 shows in block diagram a conventional data processing system comprising the data recovery system and digital separator of the present invention.

Figure 2 shows in block diagram the digital data separator which is the object of the present invention.

Figure 3 shows in timing diagram some signals present in the digital data separator of Figure 2.

Figure 4 shows in block diagram a preferred embodiment of a peak-shift recovery unit for the digital data separator of the present invention.

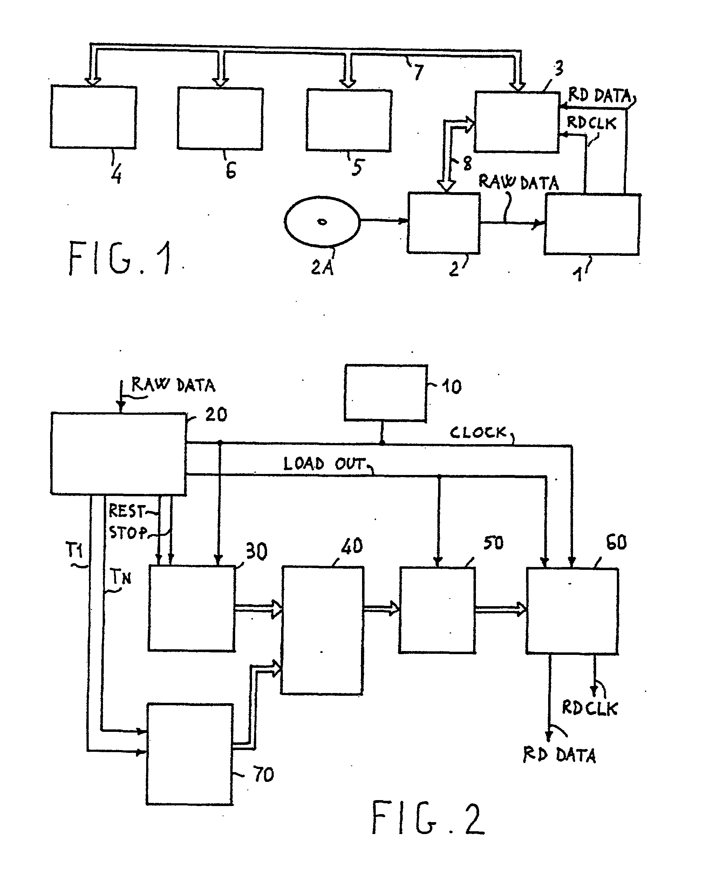

Figure 1 shows in block diagram a typical data processing system comprising the digital apparatus of the present invention.

Such apparatus indicated by reference number 1, is positioned between a drive device 2 for a mass storage 2A and a controller 3. The system of fig. 1 further comprises a central processor 4, a peripheral controller 5 and a main memory 6.

Central processor 4, main memory 6 and controllers 3, 5 are connected to each other by means of a plurality of leads or system bus 7 through which data, addresses and control signals can be exchanged. In the present embodiment assumption is made that the system mass storage is provided with a 5 1/4 inch diskette and that drive device 2 is constituted by a disk driver.

The consideration made in the following will be, however, valid for other kinds of storage devices too, as for instance, magnetic tape storages.

In the present embodiment, where a mass storage is provided by a diskette, a standard circuit chip, such as the 1791 integrated circuit chip, manufactured by Western Digital Corporation, can be used as controller 3.

Controller 3 and drive device 2 exchange a plurality of control and information signals through a channel or bus 8.

Detailed description of the circuits and interface signals between controller 3 and device 2 has been omitted since it is not essential for an understanding of the present invention.

In the case of the present invention embodiment, a 5 1/4 inch diskette having been used for mass storage together with integrated circuit chip 1791 manufactured by Western Digital as controller, the circuits and interface signals can be drawn from the specification of such products.

The same considerations are valid for the interface between controller 3 and recovery apparatus 1.

It is only pointed out that the recovery apparatus 1 must supply controller 3 with a square wave signal RDCLK and with a pulse train RD DATA at logical level 0, each pulse corresponding to a magnetic flux transition detected on recording media.

Pulses RD DATA and window signal RD CLK have only to fulfill the condition that each pulse RD DATA occur entirely within a half wave (or window) of signal RD CLK.

As for the rest, the pulse position relative to window signal RD CLK and the pulse length can be arbitrary. However, it is preferred that the length of the pulse RD DATA fall in the range of 100 to 250 nsec. and the delay of the beginning or end of a pulse relative to the transition of window signal RD CLK should be no longer than 40 nsec. Controller 3 does not need to be informed of whether each one of the pulses RD DATA corresponds to a timing transition or to a data transition.

The controller is able to distinguish between such transition from the pattern read out in response to the well known synchronization and "address mark" fields.

Also, the period of the timing or window signal can be variable and each of the two signals half waves may have a different length. Device 2 supplies digital apparatus 1 with a pulse RAW DATA in response to each detected magnetic flux transition. Since the disclosed system is intended to recover FM and MFM recorded information, the time intervals between subsequent pulses RAW DATA are indicative of such information. Apparatus 1, in response to the pulse train RAW DATA received as an input, supplies controller 3 with the window signal RD CLK and with the pulses RD DATA which correspond to the pulses RAW DATA suitably positioned relative to window signal RD CLK. Controller 3 is able by means of signal RD CLK to detect the information bits within the pulse train RD DATA and make them available in parallel form to system bus 7.

Figure 2 shows in block diagram form, the digital apparatus 1 of Fig. 1 which corresponds to the present invention. Apparatus 1 essentially comprises an oscillator 10, a timing unit 20, a logical unit 30 for measuring the interval duration between subsequent input pulses, a logical unit 40 for correcting such duration according to a speed difference as to a preestablished speed, a logic unit 50 for the peak-shift recovery and discrimination of the nominal duration corresponding to each interval, a logic unit 60 for reconstructing the read pulse train RD DATA within a window signal RD CLK generated by unit 60 itself and a unit 70 measuring and determining the speed difference as to a preestablished speed. Oscillator 10 supplies units 20, 30 and 60 with square wave a signal CLOCK having a frequency of 8 MHz;

Timing unit 20 is activated by each of the pulses RAW DATA and supplies a plurality of timing signals REST, STOP, T0, T1, T2, T3, LOAD OUT, to units 30, 50, 60, 70 in order to control and sinchronize their operation.

Particularly signal LOAD OUT is sent to units 50, 60 and signals REST, STOP are sent to unit 30.

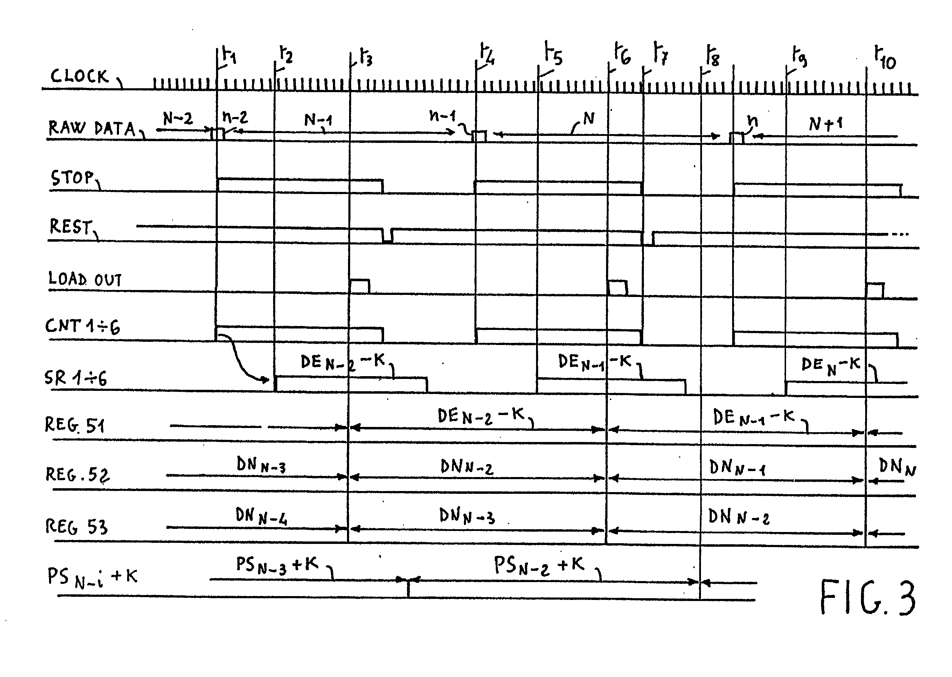

Timing unit 20 can be ambodied in several ways, with shift registers, delay lines and particularly with the same components and connections shown in Fig. 3 of the already mentioned European patent application, therefore any further description is unnecessary.

For an easy understanding of the invention reference in made to Fig. 3 which shows in timing diagram the signals generated by oscillator and by unit 20 together with other signals which will be considered later on.

Diagram CLOCK is representative of signal CLOCK generated by oscillator 10.

Diagram RAW DATA is representative of the read pulses received from unit 20. The read pulses appear as asynchronous events as to signal CLOCK and at variable time intervals owing to the magnetic media speed errors and to the peak shift.

With the rise of signal CLOCK, immediately subsequent to the rise of signal RAW DATA, signal STOP rises to 1 and is kept at 1 for a duration of 19 CLOCK periods.

With signal STOP falls to 0 a signal REST, normally at 1 falls to 0 for a duration of one CLOCK period.

Signal LOAD OUT, rises to logical level 1 for the duration of two CLOCK periods, after 16 CLOCK periods from signal STOP rising, that is after 2 microseconds.

The sequence is triggered by pulse RAW DATA and, when the sequence is exhausted, unit 20 remains unactive until a new trigger pulse is received.

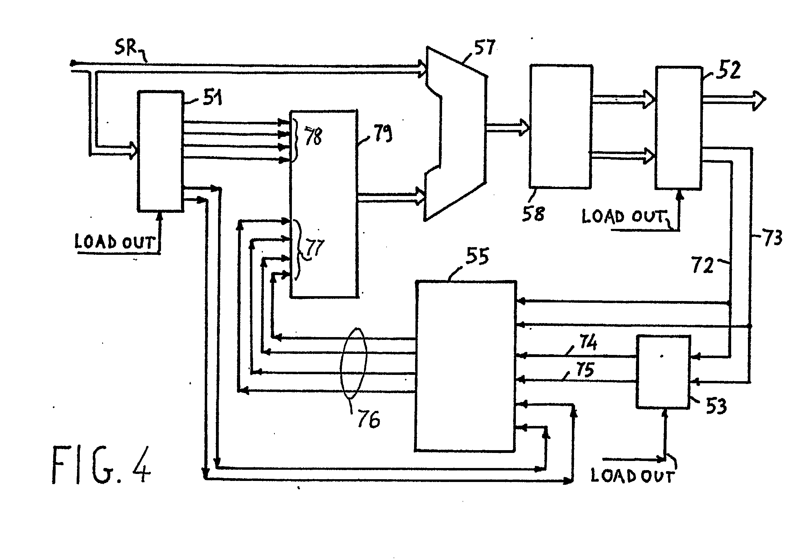

Measuring unit 30 is constituted by a six cell binary counter (practically two integrated counters as shown in Fig. 4 of the already mentioned patent application) which is reset by signal REST at logical level 0 and increments at each CLOCK pulse received on a clock input for the whole time signal STOP, applied to a control input, is at logical level 0.

Counter/unit 30 stops when signal STOP is at logical level 1. Counter/unit 30 supplies in output on a channel CNT a 6-bit binary code $CNT1 \div 6$ representative of the interval between the rising of two read pulses RAW DATA, expressed in CLOCK period number, less a fixed duration equal to 20 CLOCK periods (that is $20.125=2500$ nsec). The measurement is affected by a uncertainty owing to the asynchronous raising of pulses RAW DATA as to CLOCK pulses. The maximum value of such uncertainty is equal to two CLOCK periods that is $\pm 125$ nsec.

Counter 30 is therefore able to measure, with a resolution of $\pm 125$ nsec., time intervals varying from 2500 nsec. to $2500+125\cdot(2^6-1)=10.375$ nsec.

Binary code $CNT1 \div 6$ remains unchanged for the whole time signal STOP is at logical level 1 and is applied in input both to speed difference recovery unit 40 and to the speed error measurement unit 70.

Unit 40 further receives through a 5 lead bus V a binary code $0 \div 4$ representative of the speed error as to the media nominal speed. Memory 40 acts as transcoder and changes code $DNT1 \div 6$ received on channel CNT to a 6-bit code $SR 1 \div 6$ representative of an interval duration between read pulses corrected in accordance to code $0 \div 4$ that is without speed error.

In order to express such duration with a minimum number of bits, the numerical code value may express the interval duration less a constant quantity K, corresponding to the minimum interval duration, say 4 µsec.

Code SR1:6 is provided in input to peak-shift recovery unit 50, through channel SR.

As it will be seen in detailed way in the following, unit 50 performs suitable logic operations on code $SR1 \div 6$ received in input and defines which is the nominal duration to be attributed to the interval, whose effective duration, corrected as to speed, is expressed by code SR1:6. Unit 50 provides in output a binary 2 bit code $A_0$, $B_0$ which indicates if the nominal duration is 4, 6, 8 µsec.

This code is forwarded to unit 60. Unit 60 is timed by signals CLOCK and LOAD OUT. It provides in output a window timing signal RD CLK and a data signal RDDATA as a function of the code $A_0B_0$, periodically received in input.

Signal RD DATA may be interpreted by controller 3 (Fig. 1).

It may be noted that units such as 20, 30, 40, 60, 70 may be embodied and perform identically to the corresponding units described in the cited european patent application, so that any detailed description of the same is not required here and is unnecessary for understanding the invention, the environment of the invention being adequately identified.

Unit 50 may now be considered, where the invention more properly resides, with reference to Fig. 4 which shows in detail a preferred embodiment.

Such embodiment is particularly advantageous if the actual duration of the intervals, corrected as to speed, is expressed by a code with a limited number of bits, 5 or 6.

This implies a measurement uncertainty, which may be partially recovered.

Unit 50 comprises three register 51, 52, 53 three ROM transcoding memories 55, 79, 58 and one adder 57.

Output channel SR of unit 40 is connected to a first input of adder 57 and to the input of register 51.

Register 51 provides in output a code SR1 ÷ 5 having six bit and being expressive of the actual duration of interval N-1 corrected as to speed.

The four least significant bits of this code are input to ROM 79. The two most significant bits of this code are input to ROM 55.

The outputs of adder 57 are connected to the address inputs of ROM 58, whose outputs are connected to the inputs of register 52.

Two outputs of register 52 are connected, through leads 72, 73 to the inputs of ROM 55 as well as to the inputs of two bit register 53.

The outputs of register 53 are connected, through leads 74, 75 to two inputs of ROM 55.

The outputs of ROM 55 are connected, through channel 76, to a first input set 77 of ROM 79.

ROM 79 has a second input set 78 connected to the outputs of register 51.

The outputs of ROM 79 are connected to a second input set of adder 57. Register 51, 52, 53 are loaded with the information present at their input, on the occurrence of the leading edge of signal LOAD OUT.

The operation of unit 50 may be easily understood with reference to Fig. 3 which shows in timing diagram the contents of register 51, 52, 53.

In Figure 3 the various intervals between subsequent read pulses n-2, n-1, n, n + 1, are numbered in sequential order by N-2, N-1, N, N + 1. At instant $t_1$, with the occurrence of read pulse n-2, a code representative of the actual duration of interval N-2, becomes available at the output of unit 30.

This code is corrected, as a function of speed error, by unit 40 which provides in output, on channel SR and beginning with instant $t_2$, a code representa-

tive of the interval N-2 duration, corrected as to speed error and less a constant K corresponding to 4 µsec.

Such code is referenced in figure 3 by $DE_{N-2}–K$ and is asserted untill time $t_3$.

Such code is inputted to adder 57, which at the same time receives on second input a code representative of the quantity $PS_{n-3}+K$ where $PS_{n-3}$ is the peak-shift of the pulse which defines the end of interval N-3 and the beginning of interval N-2.

By convention, are considered as positive the peak-shifts which delay the occurrence of the read pulses and negative the peak-shifts which cause the read pulses to occurr earlier.

Quantity $PS_{n-3}$ may therefore by positive or negative, its absolute value, however, cannot exceed (if the nominal duration of the intervals is 4, 6, 8 usec) 1 microsecond.

Therefore quantity $PS_{n-3}+K$ is always positive.

With the made assumptions, it is clear that:

$$DE_{N-2}-K = DN_{N-2} -PS_{n-3} + PS_{n-2}-K$$

where $DN_{N-2}$ is the nominal duration of interval N-2.

Therefore adder 57 provides in output a code representative of the quantity $DN_{N-2}+PS_{n-2}$.

Such code is applied in input to ROM 58 which performs as a discriminator/transcoder providing in output a two bit code $A_{N-2}$, $B_{N-2}$ and a code, for instance a 6 bit code, which represents the quantity $PS_{n-2}$.

At time $t_3$, with the leading edge of signal LOAD OUT, the two codes are loaded into register 52 which make them available in output. It is clear that beginning at an instant $t_5$, a code representative of the quantity $DE_{N-1}-K$ becomes available on channel SR, and that units 57 and 58 perform in the already considered way so that at instant $t_6$, with the leading edge of signal LOAD OUT, register 52 is loaded with a code $A_{N-1},B_{N-1}$ representative of the nominal duration $DN_{N-1}$ of interval N-1.

At the same instant, the previously stored code $A_{N-2},B_{N-2}$ is loaded in register 53, and quantity $DE_{N-1}-K$ is loaded in register 51.

Therefore, beginning with instant t6 ROM 55 receives in input two codes representatives of the nominal durations $DN_{N-1}$, $DN_{N-2}$ and the two most significant bits of code SR1 ÷ 6, latched in register 51.

It is clear that memory 55 may transcode the information set received in input into a 4 bit code and without any information loss.

In fact, if the nominal duration of interval $DN_{N-1}$ is 4 µsec the two most significant bit of code SR1 ÷ 6 must be necessarily 0, if the nominal duration is 8 µsec the most significant bit must be necessarily 1 and if the nominal duration is 6 µsec, the most significant bit must be necessarily 0.

In fact the actual duration of interval N-1, corrected as to speed, cannot be different from the nominal duration by more than a preestablished amount which may be theoretically defined and experimentally measured.

In other words for a given nominal duration, the variability range of the actual duration of interval N-1, expressed by code SR1 ÷ 6 is much lesser than the full duration range which may be expressed by a six bit code SR1 ÷ 6.

Therefore it suffices that memory 55 produces in output a 4 bit code. Such code is provided as input to ROM 79 which transcodes it in the peak-shift of pulse n-1, as a function of the input information. Clearly the code in output from memory 79 may express the peak-shift $PS_{n-1}$ but one constant which may be chosen at will.

Further and this is more important, peak-shift $PS_{n-1}$ computed by memory 79 may be suitably adjusted.

In fact, it is clear that being nominal duration $DN_{N-1}$ know, missing any uncertainty factor due to $DE_{N-1}$ measurement uncertainty, second order effects on peak-shift, changes in the recording current amplitude or waveform, and so on, the peak-shift $PS_{N-1}$ may take only three theoretical well defined values which depend only on the unknown nominal duration of subsequent interval $DN_N$.

If the computation of $PS_{n-1}$ performed by memory 79 with the already indicated logical criteria, that is by difference $PS_{n-1}=DE_{N-1}-DN_{N-1} + PS_{n-2}$, leads to the definition of a $PS_{n-1}$ which too much departs from the possible theoretical values, memory 79 itself can adjust such computed value and produce in output a code having a value closer to a theoretical value.

In other words, noise effects can be attenuated.

In this way unit 79 provides in input to adder 57 a peak-shift information which is more likely the true one and the discrimination of nominal duration $DN_N$ by discriminator 58 is made easier.

These results are clearly obtained with a ROM having a capacity no greater than 256 words hence easy to be integrated in a single chip. In addition, if the actual duration code consists of 5 bit only, the required memory capacity may be reduced to 128 words.

The information in output from ROM 55 is available beginning from time instant $t_7$ and is provided in input to ROM 79 which performs, as already said, the following operation:

$$(DE_{N-1}) + (2K-DN_{N-1} + PS_{n-2})$$

hence, with an obvious substitution:

$$(DN_{N-1}-PS_{n-2} + PS_{n-1}-K) + (2K-DN_{N-1} + PS_{n-2})=PS_{n-1} + K$$

The binary code $PS_{n-1} + K$ is available in output from ROM 79 at time instant $t_8$ preceding $t_9$.

When at time instant $t_9$ code $DE_N-K$ becomes available on channel SR, adder 57 performs the following operation:

$$DE_N-K + PS_{n-1} + K$$

hence, with an obvious substitution:

$$(DN_N-PS_{n-1}PS_n-K) + PS_{n-1} + K=DN_N + PS_n$$

Thus, adder 57 provides in output a code which, with an uncertainty expressed by $PS_n$ defines the nominal duration $DN_N$.

Remining that $DN_N$ may take only the preestablished values 4, 6, 8 µsec and $PS_n$ cannot exceed 1 µsec, in absolute value, it is possible to discriminate in the output code from adder 57 a value $DN_N$ and remainder $PS_n$.

This operation is performed by ROM 58 which provides in output a binary code $A_0B_0$ expressive of the value $DN_N$ and a code $PS_n$; At time instant $t_{10}$, corresponding to the leading edge of signal LOAD OUT, $A_0$ $B_0$ and $PS_n$ are loaded in register 52 and the code $A_0$ $B_0$ is made available in input to unit 60.

The discrimination process of peak-shift $PS_n$ by means of a sequance of logical operation, instead of a single transcoding operation, as it is the case in the above mentioned patent application, is made possible with the described circuit, for the following two reasons:

1) From a logical stand point, the peak-shift of a pulse is mainly due and function of the difference between the nominal duration of the intervals immediately preceding and following the pulse. It is therefore theoretically correct to evaluate $PS_{n-2}$ as a function of $DN_{N-2}$ and $DN_{N-1}$ and from that to compute $PS_{n-1}$ by a subtractive operation from $DE_{N-1}$.

The subtractive process always starts from a quantity $PS_{n-2}$ which, for each pulse is computed as a function of the preceding and following interval duration.

Any possible accumulation of measurement error is therefore avoided.

2) From a timing standpoint, the process severing in a plurality of steps is compatible with the available time intervals because the several steps are time overlapped.

In fact considering time interval $t_6$ $t_{10}$, in case of an elementary cell duration of 4 usec and assuming a maximum speed error of ± 10%; time interval $t_6$ $t_{10}$ cannot be lesser than 3,6 µsec.

At time $t_6$ information $DE_{N-1}$, $DN_{N-1}$, $DN_{N-2}$ is already available in registers 51, 52, 53.

Therefore units 55 and 79 may start to operate providing in output from unit 79 an information which is stable well ahead of time instant $t_{10}$.

In order to have a stable information in input to register 52 at time $t_{10}$; it suffices that instant $t_9$ (at which code SR1 ÷ 6, expressing duration $DE_N$ is present in input to unit 57) precedes $t_{10}$ of the propagation delay in the units 57 and 58 only.

This propagation delay may be easily contained within few hundreds of nanosecond, much lesser than the 2000 nsec interval between the reading pulse n and the immediately following LOAD OUT pulse.

As a consequence the described circuit can be easily embodied in an integrated circuit. In fact, it is clear that unit 55 can be embodied in a ROM (or equivalent logic) having six addressing inputs hence with an extremely reduced capacity and unit 79 may have 8 inputs only.

By the same token, quantity $DN_N + PS_n$ received in input by unit 58 may be expressed, with the same resolution of SR1 ÷ 6, with a 7 bit code. Unit 58 may therefore be embodied with a ROM (or equivalent decoding logic) having 7 input addresses hence with a reduced capacity.

Adder 57, having to perform binary addition on input data which are always positive, may be embodied will very simple and compact integrated circuitry.

The extremely high reduction in circuit complexity permits the addition to the circuit of further features which enhance and broaden its performances.

In particular it becomes feasible to increase the measurement resolution of the interval actual duration by expressing such duration with a bit number greater than 6, for instance 7 or 8.

## Claims

Digital data separator for a recovery apparatus of binary information recorded on a movable media, of the kind comprising a measurement unit (30) of the actual duration of an interval N comprised between two subsequent read pulses n + 1 and n, a measurement unit (70) of the media speed error, a speed error recovery unit (40) converting said actual interval duration in a duration corrected as to speed error and expressed by a binary code SRXX and a peak shift recovery unit (50), receiving in input said code SRXX and discriminating the peak-shift components which affect the duration expressed by said code from a nominal duration which is attributed to said interval N, characterized in that said peak-shift recovery unit comprises:

– a first register (51) connected to an input channel (SR) to receive and store a first code SRXX related to an interval N-1 preceding interval N.

– a second register (52) to store a second binary code expressing a nominal duration $DN_{N-1}$ of an interval N-1

– a third register (53) in cascade with said second register to store a third code expressing a nominal duration $DN_{N-2}$ of an interval N-2 preceding said N-1 interval,

– first transcoding means (55) having input to receive said second code, said third code, and at least the most significant bit of said first code, said first transcoding means transcoding the input information in a compressed code having lesser number of bits,

– second transcoding means (79) having inputs receiving the bits of said first code, except said at least most significant bit, and said compressed code, said second transcoding means providing in ouptut said fourth code, expressing the peak-shift of read pulse n-1.

– an arithmetic unit (57) having first inputs connected to said channel SR to receive a fifth code SRXX related to interval N, second inputs connected to outputs of said second transcoding means to receive said fourth code, said arithmetic unit providing in output a sixth binary code expressive of the nominal duration of interval N, corrected as to speed error and further as to peak-shift of read pulse n-1, and

– discriminating means (58) receiving in input said sixth code and producing in output a seventh code expressive of the nominal duration $DN_N$ of said N interval, the output of said discriminating means being connected to the input of said second register (52).

## Patentansprüche

Digitaldaten-Trennschaltung für ein Gerät zum Wiedergewinnen auf einem beweglichen Träger aufgezeichneter Binärinformationen, das eine Meßeinrichtung (30) zum Messen der tatsächlichen Dauer eines Intervalls N zwischen zwei aufeinanderfolgenden Leseimpulsen n + 1 und n enthält, ferner eine Meßvorrichtung (70) für den Geschwindigkeitsfehler des Trägers; weiterhin eine Geschwindigkeitsfehler-Korrektureinheit (40), welche die tatsächliche Dauer in eine hinsichtlich des Geschwindigkeitsfehlers korrigierte, durch einen Binärcode SRXX dargestellte Dauer umwandelt; sowie eine Impulsspitzenverschiebungs-Wiedergewinnungseinheit (59), welche am Eingang den Code SRXX empfängt und die Impulsspitzenverschiebungskomponenten, welche auf die durch den Code definierte Dauer einwirken, von einer dem Intervall N zugeordneten Nenndauer unterscheidet, dadurch gekennzeichnet, daß die Impulsspitzenverschiebungs-Wiedergewinnungseinheit umfaßt:

– ein an einen Eingangskanal (SR) angeschlossenes erstes Register (51) zum Empfang und zur Speicherung eines Codes SRXX, der einem dem Intervall N vorangehenden Intervall N−1 zugeordnet ist;

– ein zweites Register (52) zum Speichern eines zweiten Binärcodes, der die Nenndauer $DN_{N-1}$ eines Intervalls N−1 angibt;

– einen dritten Code, welcher die Nenndauer $DN_{N-2}$ eines dem Intervall N−1 vorangehenden Intervalls N−2 angibt;

– einen ersten Codeumsetzer (55), der als Eingangsgrößen den zweiten Code, den dritten Code sowie zumindest das höchstwertige Bit des ersten Codes empfängt und die Eingangsinformation in einen komprimierten Code mit weniger Bits umformt;

– einen zweiten Codeumsetzer (79) mit Eingängen für die Bits des ersten Codes – ausgenommen das geringstwertige Bit –, und für den komprimierten Code, wobei der zweite Codeumsetzer am Ausgang einen vierten Code liefert, welcher die Impulsspitzenverschiebung des Leseimpulses n−1 angibt;

– eine Arithmetikeinheit (57), deren erste Eingänge zum Empfang eines dem Intervall N zugeordneten fünften Codes SRXX an den Eingangskanal SR angeschlossen sind und dessen zweite Eingänge zum Empfang des vierten Codes an die Ausgänge des zweiten Codeumsetzers (79) angeschlossen sind, und welche Arithmetikeinheit am Ausgang einen sechsten Binärcode liefert, welcher der hinsichtlich des Geschwindigkeitsfeh-

lers und hinsichtlich der Impulsspitzenverschiebung des Leseimpulses n–1 korrigierten Nenndauer des Intervalls N entspricht;
– einen am Eingang den sechsten Code empfangenden Diskriminator (58), der am Ausgang einen siebenten Code erzeugt, welcher der Nenndauer DN$_N$ des Intervalls N entspricht und wobei der Ausgang des Diskriminators mit dem Eingang des zweiten Registers (52) in Verbindung steht.

## Revendications

Séparateur de données numériques pour un dispositif de restitution d'informations binaires enregistrées sur un support mobile, du type comprenant une unité de mesure (30) de la durée réelle d'un intervalle N compris entre deux impulsions lues successivement (n + 1) et n, une unité de mesure (70) de l'erreur de vitesse de support, une unité de correction d'erreur de vitesse (40) convertissant la durée d'intervalle réelle en une durée corrigée quant à l'erreur de vitesse et exprimée par un code binaire SRXX et une unité de correction de déplacement de crête (50), recevant en entrée le code SRXX et faisant une discrimination entre les composantes de déplacement de crête qui modifient la durée exprimée par le code par rapport à une durée nominale qui est attribuée à l'intervalle N, caractérisé en ce que l'unité de correction de déplacement de crête comprend:

– un premier registre (51) connecté à une voie d'entrée (SR) pour recevoir et mémoriser un premier code SRXX relatif à un intervalle (N-1) précédant l'intervalle N;

– un deuxième registre (52) pour mémoriser un deuxième code binaire exprimant une durée nominale DN$_{N-1}$ d'un intervalle (N-1);

– un troisième registre (53) en cascade avec le deuxième registre pour mémoriser un troisième code exprimant une durée nominale DN$_{N-2}$ d'un intervalle (N-2) précédant l'intervalle (N-1);

– un premier moyen transcodeur (55) ayant une entrée pour recevoir le deuxième code, le troisième code, et au moins le bit de poids fort du premier code, le premier moyen transcodeur transcordant les informations d'entrée en un code comprimé comportant un moins grand nombre de bits;

– un deuxième moyen transcodeur (79) ayant des entrées recevant les bits du premier code, excepté ledit bit de poids fort au moins, et le code comprimé, le deuxième moyen transcodeur fournissant en sortie un quatrième code exprimant le déplacement de crête de l'impulsion lue (n-1);

– une unité arithmétique (57) ayant des premières entrées connectées à la voie SR pour recevoir un cinquième code SRXX relatif à l'intervalle N, des deuxièmes entrées connectées aux sorties du deuxième moyen transcodeur pour recevoir le quatrième code, l'unité arithmétique fournissant en sortie un sixième code binaire exprimant la durée nominale de l'intervalle N, corrigée quant à l'erreur de vitesse et en outre quant au déplacement de crête de l'impulsion lue (n-1); et

– un moyen discriminateur (58) recevant en entrée le sixième code et produisant en sortie un septième code exprimant la durée nominale DN$_N$ de l'intervalle N, la sortie du moyen discriminateur étant connectée à l'entrée du deuxième registre (52).

FIG. 1

FIG. 2

FIG. 3

EP 0 222 133 B1

FIG. 4